# EUROPÄISCHE PATENTSCHRIFT

(11) **EP 2 951 037 B1**
(45) Veröffentlichungstag und Bekanntmachung des Hinweises auf die Patenterteilung: **11.11.2020**
(21) Anmeldenummer: 13811452.5
(22) Anmeldetag: 17.12.2013
(51) Int. Cl.: B60C 23/04

(54) **UNIVERSELLE ÜBERWACHUNGSEINRICHTUNG FÜR FAHRZEUGREIFEN**
UNIVERSAL MONITORING DEVICE FOR VEHICLE TIRES
DISPOSITIF UNIVERSEL DE SURVEILLANCE DE PNEUS DE VÉHICULES

(30) Priorität: 04.02.2013 DE 102013001837
(43) Veröffentlichungstag der Anmeldung: 09.12.2015
(73) Patentinhaber: WEGMANN automotive GmbH, 97209 Veitshöchheim (DE)
(72) Erfinder: MARKERT, Christian, 89542 Herbrechtingen (DE)
(74) Vertreter: Lohr, Jöstingmeier & Partner
(86) Internationale Anmeldenummer: PCT/EP2013/076918
(87) Internationale Veröffentlichungsnummer: WO 2014/117903

(56) Entgegenhaltungen:
- EP-A1- 1 826 029
- DE-U1-202004 021 911
- US-A1- 2004 017 291
- US-A1- 2012 119 895

## Beschreibung

Die vorliegende Erfindung betrifft eine universelle Überwachungseinrichtung zur Überwachung von einer oder mehreren Zustandsgrößen eines Fahrzeugreifens, sowie ein Verfahren zur Konfiguration einer universellen Überwachungseinrichtung zur Überwachung von einer oder mehreren Zustandsgrößen eines Fahrzeugreifens, im Einzelnen gemäß den Oberbegriffen der Ansprüche 1 und 12.

In modernen Fahrzeugen ist es üblich und in verschiedenen Ländern zunehmend auch vorgeschrieben, dass zumindest der Druck der an dem Fahrzeug montierten Fahrzeugreifen als Zustandsgröße überwacht wird. Hierfür ist bei einem sogenannten aktiven System eine Überwachungseinrichtung im luftgefüllten Raum des Reifens vorgesehen, die einen Sensor zur Erfassung des Druckes und einen Sender zur Übersendung eines vom erfassten Druck abhängigen Signals an eine Empfangseinrichtung innerhalb des Fahrzeugs beziehungsweise der Fahrzeugsteuerung aufweist, damit dem Fahrer ein zu niedriger Reifendruck signalisiert werden kann. Um die Erfassung des Reifendrucks mit dem Sensor und die Übersendung des Signals mit dem Sender zu steuern, umfasst die Überwachungseinrichtung im Fahrzeugreifen eine Steuervorrichtung mit einem in dieser hinterlegten Computerprogramm, welches durch die Steuervorrichtung ausgeführt wird und die Funktionsweise der Steuerung bestimmt.

Da die Überwachungseinrichtungen mit den Empfangseinrichtungen in den verschiedenen Fahrzeugtypen verschiedener Fahrzeughersteller kommunizieren müssen, wird für jede Überwachungseinrichtung im Vorhinein festgelegt, welches Signal sie aussenden muss, damit dieses von der Empfangseinrichtung korrekt verarbeitet werden kann. Im Einzelnen muss festgelegt werden, welchen Inhalt und welche Codierung das Signal aufweist muss, das heißt welche Zustandsgrößen und welche weiteren Information im Signal vorhanden sein müssen (Inhalt) und an welcher Stelle diese im Signal mit welcher Länge, beispielsweise Bitlänge zu finden sind (Codierung). Obwohl durchaus identische oder sehr ähnliche Hardware zum Einsatz gelangen konnte, haben sich in der Vergangenheit daher die in den Steuervorrichtungen der Überwachungseinrichtungen hinterlegten Computerprogramme voneinander unterschieden, je nachdem für welchen Fahrzeugtyp die Überwachungseinrichtung eingesetzt werden sollte. Jedes Computerprogramm hat den Inhalt und die Codierung des Signals an die entsprechende Software in der Empfangseinrichtung des Fahrzeugs des jeweiligen Fahrzeugtyps angepasst, wobei das Computerprogramm entweder gleich bei der Herstellung der Überwachungseinrichtung in die Steuervorrichtung programmiert werden konnte, oder, wie im deutschen Gebrauchsmuster DE 20 2004 021 911 U1 vorgeschlagen, auch erst später durch einen Installateur oder Ersatzteillieferant.

Gemäß der DE 20 2004 021 911 U1 soll die spätere Programmierung beziehungsweise Überprogrammierung des Computerprogramms in der Steuervorrichtung den Umfang der Ersatzteilhaltung reduzieren, da durch die Programmierung der Steuervorrichtung erst unmittelbar vor Einsetzen der Überwachungseinrichtung in den Fahrzeugreifen eines bestimmten Fahrzeugtyps nicht auf bereits fertig programmierte Überwachungseinrichtungen zurückgegriffen werden muss, die sonst mit verschiedenen Programmen für verschiedene Fahrzeugtypen bereitgehalten werden müssten. Anstelle der Übertragung des vollständigen ausführbaren Computerprogramms in den Speicher der Steuervorrichtung schlägt die genannte Gebrauchsmusterschrift ferner vor, bei der Herstellung der Überwachungseinrichtung in dem Speicher der Steuervorrichtung mehrere Herstellercodes zu programmieren, das heißt für jeden Hersteller ist ein ausführbares Computerprogramm in dem Speicher hinterlegt, das auf den jeweiligen Fahrzeugtyp des Herstellers abgestimmt ist. Durch Übersenden eines Programmsignals kann nun genau eines dieser verschiedenen Computerprogramme ausgewählt werden, gemäß welchem die Steuervorrichtung anschließend arbeitet.

Bei der erstgenannten Alternative ergibt sich der Nachteil, dass die vollständige Programmierung der Steuervorrichtung durch den Installateur oder Ersatzteillieferanten eine erhebliche Zeit in Anspruch nimmt. So ist bei moderner Übertragungstechnik beispielsweise mit einer Programmierzeit von rund 1 bis 2 Minuten je Reifendrucküberwachungseinrichtung zu rechnen, was sich bei vier Fahrzeugrädern schnell auf 5 Minuten oder mehr aufsummiert. Hierdurch wird die erforderliche Servicezeit beispielsweise beim Austausch aller Räder eines Fahrzeugs um ca. 50 Prozent erhöht, was nachteilig ist.

Bei der zweiten Alternative, gemäß welcher die verschiedenen Programme verschiedener Hersteller bereits in der Steuervorrichtung programmiert sind und nun nur noch eines dieser Programme ausgewählt werden muss, ergibt sich zwar der Vorteil einer kürzeren Zeitdauer bei der Auswahl des Computerprogrammes, jedoch ist die Verwendbarkeit der Überwachungseinrichtung durch die Verwendung einzelner nicht änderbarer Computerprogramme auf die zuvor programmierten Fahrzeugtypen und ein damit verbundenes Signalformat beschränkt.

US 2012/0119895 A1 beschreibt ein Programmiersystem für eine Reifendrucküberwachungseinrichtung mit einer Programmiereinrichtung, die in der Lage ist, mitzuteilen, welches einer Vielzahl von Übertragungsprotokollen durch einen Sender/Empfänger einer Reifendrucküberwachungseinrichtung verwendet wird.

Der vorliegenden Erfindung liegt die Aufgabe zugrunde, eine universelle Überwachungseinrichtung zur Überwachung von einer oder mehreren Zustandsgrößen eines Fahrzeugreifens anzugeben, die eine besonders große Flexibilität bei der Anpassung an verschiedene Empfangseinrichtungen im Fahrzeug aufweist und zugleich die notwendige Installationszeit minimiert. Ferner soll ein Verfahren zur Konfiguration einer solchen Überwachungseinrichtung angegeben werden.

Die erfindungsgemäße Aufgabe wird durch eine universelle Überwachungseinrichtung mit den Merkmalen von Anspruch 1 und ein Verfahren zur Konfiguration einer universellen Überwachungseinrichtung mit den Merkmalen von Anspruch 12 gelöst. In den abhängigen Ansprüchen sind vorteilhafte und besonders zweckmäßige Ausgestaltungen der Erfindung angegeben.

Durch die Erfindung wird eine Lösung zur Herstellung beziehungsweise Konfiguration einer universellen Überwachungseinrichtung gegeben, die so flexibel wie die bekannte vollständige Übertragung des gesamten Computerprogramms in den Speicher der Überwachungseinrichtung vor Ort ist, zugleich jedoch mit einem Bruchteil der Übertragungsdauer auskommt. Anstelle der Übertragung eines kompilierten ausführbaren Programmcodes in den Speicher der Steuervorrichtung der Überwachungseinrichtung wird nämlich nur noch ein Parametersatz an die Überwachungseinrichtung übertragen und in deren Speicher gespeichert. Da gleichzeitig das in der Überwachungseinrichtung hinterlegte ausführbare Computerprogramm, welches die Erfassung der Zustandsgröße und die Sendung des Signals steuert, eine Vielzahl von verschiedenen einzeln oder in Gruppen aktivierbaren Funktionsmodulen aufweist, deren Arbeitsweise erst durch den im Speicher hinterlegten Parametersatz bestimmt wird, kann eine besonders große Flexibilität auf der einen Seite bei der Erfassung einer oder mehrerer Zustandsgrößen des Fahrzeugreifens und auf der anderen Seite bei der fahrzeugspezifisch angepassten Erstellung beziehungsweise Codierung und Übersendung des die erfasste Zustandsgröße beschreibenden Signals erreicht werden.

Das permanent im Speicher der Steuervorrichtung oder einem dieser zugeordneten Speicher hinterlegte Computerprogramm mit den verschiedenen Funktionsmodulen kann auch als Master-Software bezeichnet werden, die bei jeder Anwendung der universellen Überwachungseinrichtung nahezu oder vollständig identisch ist. Der Parametersatz hingegen variiert in Abhängigkeit der jeweiligen fahrzeugspezifischen Anwendung.

Da der Parametersatz einen wesentlich kleineren Speicherbedarf als die Master-Software aufweist, kann er besonders schnell von einer Konfigurationseinrichtung, die beispielsweise in einer Werkstätte eines Fahrzeugherstellers, Servicepartners oder eines Reifenservices vorgesehen ist, in den Speicher der universellen Überwachungseinrichtung übertragen werden, insbesondere drahtlos. Die Master-Software hingegen kann bereits bei der Herstellung der universellen Überwachungseinrichtung beispielsweise in einer Produktionsstraße in den Speicher programmiert werden, entweder drahtlos oder zur Herstellung einer besonders hohen Programmiergeschwindigkeit auch durch entsprechende elektrische Kontakte.

Die Programmierung des ausführbaren Computerprogramms in der Steuervorrichtung, das heißt der sogenannten Master-Software bei der Herstellung bedeutet nicht, dass diese nicht im Bedarfsfall nachträglich umprogrammiert oder überprogrammiert werden kann, um beispielsweise neue Funktionsmodule einzurichten oder vorhandene Funktionsmodule zu überarbeiten. Dies wird in der Regel jedoch nur in größeren Zeitabständen für sogenannte Software-Updates bei Altbeständen erforderlich sein und nicht unmittelbar während eines Reifenservices.

Das im Speicher der Überwachungseinrichtung gespeicherte ausführbare Computerprogramm (Master-Software) beinhaltet vorteilhaft alle grundlegenden Funktionsmodule, um eine anwendungsspezifische Software für alle auf dem Markt befindlichen oder erforderlichen Überwachungseinrichtungen, bei der Überwachung des Reifendrucks auch Reifendrucksensor genannt, zu realisieren. Jedes einzelne Funktionsmodul kann je nach Applikation verwendet oder eben nicht verwendet werden, indem es durch einen Parameter des gespeicherten Parametersatzes aktiviert oder deaktiviert wird. Wenn ein Funktionsmodul verwendet wird, so können vorteilhaft weitere Parameter aus dem Parametersatz das Verhalten des Funktionsmoduls definieren.

Im Einzelnen umfasst eine erfindungsgemäße universelle Überwachungseinrichtung zur Überwachung von einer oder mehreren Zustandsgrößen eines Fahrzeugreifens wenigstens einen Sensor zur Erfassung einer Zustandsgröße des Fahrzeugreifens, beispielsweise des Luftdruckes oder der Temperatur. Es ist wenigstens ein Sender zur Übersendung eines drahtlosen codierten Signals in Abhängigkeit der erfassten Zustandsgröße vorgesehen, wobei unter Codierung die anwendungsspezifische Einbindung eines von der erfassten Zustandsgröße abhängigen Wertes in das analoge oder vorteilhaft digitale Signal zu verstehen ist.

Die erfindungsgemäße Überwachungseinrichtung umfasst ferner eine Steuervorrichtung, die mit dem Sensor und dem Sender in Verbindung steht, um die Erfassung der Zustandsgröße und die Sendung des Signals zu steuern, wobei der Steuervorrichtung ein Speicher zugeordnet oder in diese integriert ist, in welchem ein durch die Steuervorrichtung ausführbares Computerprogramm, zuvor auch als Master-Software bezeichnet, gespeichert ist, das die Erfassung der Zustandsgröße und die Sendung des Signals steuert.

Erfindungsgemäß weist das Computerprogramm nun eine Vielzahl von einzelnen oder in Gruppen aktivierbaren Funktionsmodulen auf, die eingerichtet sind, um in Abhängigkeit von ihrer Aktivierung oder Deaktivierung den Inhalt und die Codierung des zu sendenden Signals zu verändern, um dadurch das Signal an die Anforderungen eines das Signal auswertenden Empfängers, insbesondere innerhalb des Fahrzeugs, beispielsweise der Fahrzeugsteuerung, anpassen zu können, sodass die Überwachungseinrichtung in verschiedenen Fahrzeugsystemen verschiedener Hersteller verwendet werden kann.

Der Steuervorrichtung ist erfindungsgemäß ein Empfänger zum Empfangen eines Parametersatzes zugeordnet, wobei der Empfänger innerhalb der Steuervorrichtung oder außerhalb von dieser vorgesehen sein kann. Ferner ist der Speicher der Steuervorrichtung zum Speichern des vom Empfänger empfangenen Parametersatzes eingerichtet und das im Speicher gespeicherte, von der Steuervorrichtung ausführbare Computerprogramm ist eingerichtet, um seine Funktionsmodule in Abhängigkeit von Parametern des gespeicherten Parametersatzes zu aktivieren und deaktivieren und die durch die Funktionsmodule ausgeführte Veränderung des Inhalts und der Codierung des zu sendenden Signals in Abhängigkeit von Parametern des gespeicherten Parametersatzes zu bestimmen.

Eine vorteilhafte Ausführungsform sieht vor, dass das Computerprogramm eingerichtet ist, um stets wenigstens zwei seiner Funktionsmodule in Abhängigkeit des gespeicherten Parametersatzes zu aktivieren, das bedeutet, dass während des Gebrauchs der universellen Überwachungseinrichtung immer zumindest zwei Funktionsmodule aktiv sind und somit den Inhalt und die Codierung des von der Überwachungseinrichtung mittels des Senders gesendeten Signals bestimmen.

Beispielsweise weist der Parametersatz einen oder mehrere Parameter auf, welche die Position eines Wertes einer mit dem Sensor erfassten Zustandsgröße in dem zu sendenden Signal bestimmen.

Der Parametersatz kann einen oder mehrere Parameter aufweisen, welche die Bitlänge eines Wertes einer mit dem Sensor erfassten Zustandsgröße in dem zu sendenden Signal bestimmen.

Eine Ausführungsform der Erfindung sieht vor, dass der Parametersatz einen oder mehrere Parameter aufweist, welche ein Sendeintervall und/oder eine Bitübertragungsgeschwindigkeit des zu sendenden Signals bestimmen.

Günstig ist es, wenn der Parametersatz einen oder mehrere Parameter aufweist, welche ein Erfassungsintervall zur Erfassung einer Zustandsgröße mit dem Sensor bestimmen.

Beispiele für Funktionsmodule der universellen Überwachungseinrichtung sind die folgenden:
- ein Funktionsmodul zur Steuerung der Erfassung des Luftdruckes in dem Fahrzeugreifen und der Sendung eines hiervon abhängigen Druckwertes
- ein Funktionsmodul zur Steuerung der Erfassung einer Temperatur in dem Fahrzeugreifen und der Sendung eines hiervon abhängigen Temperaturwertes
- ein Funktionsmodul zur Steuerung der Energieabgabe einer in der Überwachungseinrichtung integrierten elektrischen Batterie
- ein Funktionsmodul zur Steuerung einer Zeiterfassung
- ein Funktionsmodul zur Steuerung der Codierung, des Sendeintervalls, der Bitübertragungsgeschwindigkeit und/oder der Modulation des zu sendenden Signals
- ein Funktionsmodul zur Steuerung der Sendung von in dem Parametersatz abgelegten Statuswerten, Identifikationswerten und/oder Grenzwerten für die Zustandsgröße.

Beispiele für in dem Parametersatz abgelegte Statuswerte sind beispielsweise die Reifengröße, die Latschfläche, Seitenkräfte und andere Reifenzustandsgrößen des Reifens, in welchem die universelle Überwachungseinrichtung eingesetzt ist.

Gemäß einer vorteilhaften erfindungsgemäßen Ausführung ist der Überwachungseinrichtung ein Beschleunigungssensor zugeordnet oder in diese integriert, welche die Richtung einer Beschleunigung der Überwachungseinrichtung erfasst. Ferner ist ein Funktionsmodul zur Steuerung der Erfassung der Beschleunigungsrichtung mit dem Beschleunigungssensor und zum Senden eines hiervon abhängigen Wertes mit dem Sender vorgesehen. Hierdurch ist es möglich, dass die Überwachungseinrichtung selbsttätig feststellt, auf welcher Seite der Fahrtrichtung sie in einem Fahrzeugreifen installiert ist. Zugleich können weitere Größen erfasst werden, beispielsweise die Drehgeschwindigkeit oder Drehzahl des Reifens, um zu bestimmen, ob die Überwachungseinrichtung auf einer Vorderachse oder einer Hinterachse beziehungsweise einer angetriebenen Achse oder nicht angetriebenen Achse im Fahrzeug integriert ist, insbesondere durch Vergleich der erfassten Drehgeschwindigkeit oder Drehzahl mit einer vorgegebenen berechneten Drehgeschwindigkeit oder Drehzahl und/oder der Drehgeschwindigkeit/Drehzahl anderer Reifen.

Der universellen Überwachungseinrichtung kann gemäß einer erfindungsgemäßen Ausführungsform neben dem ersten Empfänger zum Empfangen des Parametersatzes ein zweiter Empfänger zugeordnet oder in diese integriert sein, der zum Empfangen von Steuersignalen aus einer Sendevorrichtung des Fahrzeugs eingerichtet ist. Ferner ist in diesem Fall vorteilhaft wenigstens ein Funktionsmodul zur Steuerung des zweiten Empfängers und zur Verarbeitung der von diesem empfangenen Steuersignalen vorgesehen. Der zweite Empfänger kann sich beispielsweise hinsichtlich seiner Empfangsfrequenz, Signalamplitude oder durch sein Modulations- beziehungsweise Demodulationsverfahren vom ersten Empfänger unterscheiden. Selbstverständlich ist es auch möglich, dass sowohl der Empfang des Parametersatzes als auch der Empfang von Steuersignalen aus einer Sendevorrichtung des Fahrzeugs von ein- und demselben Empfänger ausgeführt werden.

Im Unterschied zu dem im Speicher der Überwachungseinrichtung hinterlegten von der Steuervorrichtung ausführbaren Programm (Master-Software) kann der empfangene und im Speicher hinterlegte Parametersatz frei von einem durch die Steuervorrichtung ausführbaren Programm beziehungsweise frei von durch die Steuervorrichtung ausführbarem Programmcode sein, sondern tatsächlich nur Parameter aufweisen, welche das Verhalten der einzelnen Funktionsmodule bestimmen, sowie insbesondere weitere Informationen oder Statuswerte beinhalten.

Ein erfindungsgemäßes Verfahren zur Konfiguration einer universellen Überwachungseinrichtung zur Überwachung von einer oder mehreren Zustandsgrößen eines Fahrzeugreifens sieht das Übertragen eines Parametersatzes mittels einer Konfigurationseinrichtung drahtlos oder drahtgebunden an die Steuervorrichtung der Überwachungseinrichtung und das Speichern des Parametersatzes in dem Speicher der Überwachungseinrichtung vor, wobei das Computerprogramm anschließend eines oder mehrere einer Vielzahl von in ihm vorgesehenen Funktionsmodulen in Abhängigkeit von Parametern des gespeicherten Parametersatzes aktiviert oder deaktiviert, wobei die Funktionsmodule in Abhängigkeit ihrer Aktivierung oder Deaktivierung und in Abhängigkeit von Parametern des gespeicherten Parametersatzes den Inhalt und die Codierung des mit dem Sender gesendeten Signals verändern.

Die Erfindung soll nachfolgend anhand eines Ausführungsbeispiels und den Figuren exemplarisch beschrieben werden.

Es zeigen:
- Figur 1: eine schematische Darstellung einer erfindungsgemäßen Überwachungseinrichtung und deren Verwendung;
- Figur 2: eine schematische Darstellung des Speicherinhalts der erfindungsgemäßen Überwachungseinrichtung.

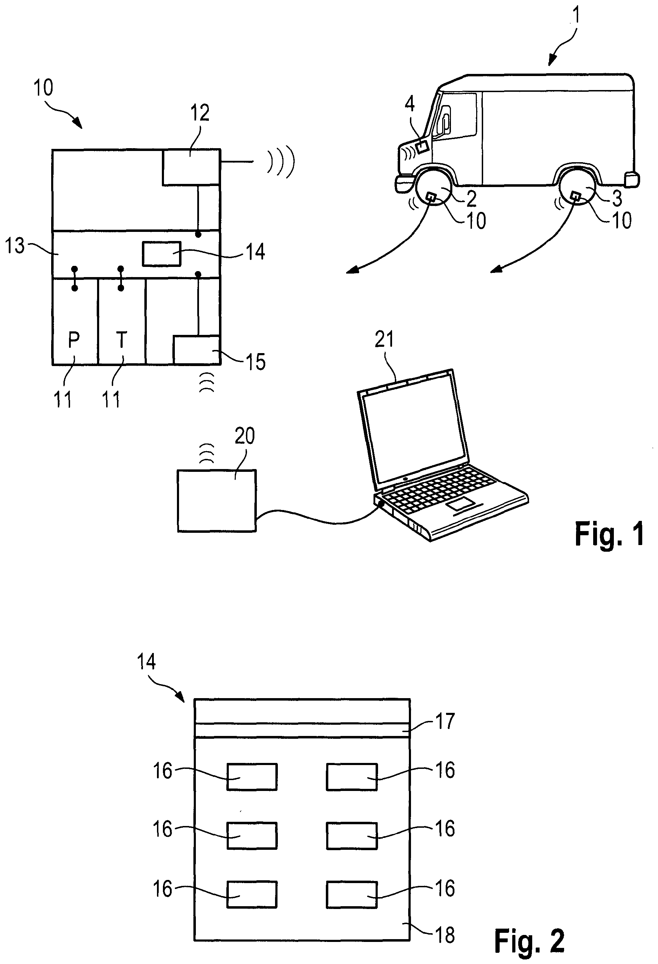

In der Figur 1 ist schematisch die Verwendung einer erfindungsgemäßen Überwachungseinrichtung dargestellt. Von der erfindungsgemäßen Überwachungseinrichtung sind eine Vielzahl in den verschiedenen Reifen eines Fahrzeugs 1 vorgesehen, siehe hier jeweils eine Überwachungseinrichtung 10 in einem Reifen des Vorderrades 2 und eine Überwachungseinrichtung 10 in einem Reifen des Hinterrades 3.

Die Überwachungseinrichtungen 10 erfassen jeweils wenigstens eine Zustandsgröße in den Reifen der Vorderräder 2 und der Hinterräder 3 und senden ein entsprechendes Signal an eine Empfangseinrichtung 4 in dem Fahrzeug 1, welche die empfangenen Signale auswerten und in der Fahrzeugsteuerung speichern und/oder einem Fahrer signalisieren kann.

Eine Überwachungseinrichtung 10 aus dem Fahrzeugreifen ist in der Figur 1 ferner nochmals etwas größer dargestellt, wobei man einzelne Komponenten erkennen kann. So weist die Überwachungseinrichtung 10 wenigstens einen Sensor 11 zur Erfassung einer Zustandsgröße des Fahrzeugreifens auf. Vorliegend ist ein Ausführungsbeispiel mit zwei Sensoren 11 dargestellt, von denen einer den Luftdruck im Fahrzeugreifen und der andere die Temperatur des Fahrzeugreifens erfasst. Beide Zustandsgrößen könnten jedoch auch von ein- und demselben Sensor erfasst werden.

Ferner ist ein Sender 12 vorgesehen, der in Abhängigkeit des erfassten Druckes und der erfassten Temperatur ein Signal an die Empfangseinrichtung 4 im Fahrzeug 1 sendet.

Zur Steuerung der Erfassung des Druckes und der Temperatur sowie der Sendung des Signals ist eine Steuervorrichtung 13 vorgesehen, die einen Speicher 14 aufweist. Auf dessen Inhalt wird nachfolgend anhand der Figur 2 näher eingegangen.

Die Überwachungseinrichtung 10 weist ferner einen Empfänger 15 auf, der einen Parametersatz aus einer Konfigurationseinrichtung 20, die beispielsweise mit einem Computer 21 verbunden ist, empfängt. Mittels des Computers 21 kann ein für die Verwendung der Überwachungseinrichtung 10 im Fahrzeug 1 passender Parametersatz beispielsweise aus einer Datenbank erstellt werden und mittels der Konfigurationseinrichtung 20 an den Empfänger 15 drahtlos oder drahtgebunden übersandt werden, sodass der Parametersatz in dem Speicher 14 gespeichert wird. Die Übersendung des vollständigen Parametersatzes, der gemäß einer Ausführungsform stets dieselbe Länge und dasselbe Format aufweist, was jedoch nicht zwingend ist, benötigt nur wenige Sekunden, insbesondere sogar weniger als 1 Sekunde.

In der Figur 2 ist der Inhalt des Speichers 14 schematisch und beispielhaft dargestellt. So ist in dem Speicher 14 zunächst ein durch die Steuervorrichtung 13 (in der Figur 2 nicht gezeigt) ausführbares Computerprogramm 18 gespeichert. Dieses weist eine Anzahl von Funktionsmodulen 16 auf. Ferner ist in dem Speicher 14 ein Parametersatz 17 gespeichert. Dieser wird im Betrieb der Überwachungseinrichtung oder auch nur während einer Installationsroutine derselben durch die Steuervorrichtung 13 gelesen, woraufhin diese entsprechend der Arbeitsweise des Computerprogramms 18 einzelne Funktionsmodule 16 aktiviert oder deaktiviert, sowie das Verhalten der einzelnen Funktionsmodule 16 in Abhängigkeit des Parametersatzes 17 anpasst.

Wenn beispielsweise ein Funktionsmodul 16 zur Steuerung der Signalcodierung und physikalischer Signaleigenschaften vorgesehen ist, so kann dieses Funktionsmodul, gegebenenfalls durch einzelne Unterfunktionen, beispielsweise den strukturellen Aufbau des Signals (Codierung), beispielsweise die Länge und die Struktur einer Präambel, die Länge einer Seriennummer und die Ordnung der einzelnen unterschiedlichen Informationen wie Druckwert, Temperaturwert und/oder Status innerhalb des Signals bestimmen. Zugleich kann die technische Schnittstelle zwischen der Überwachungseinrichtung 10 und der Empfangseinrichtung 4 im Fahrzeug 1 näher definiert werden, beispielsweise durch Vorgabe der Art der Modulation, der Sendegeschwindigkeit (Bitübertragungsgeschwindigkeit) und der Frequenz des Signals.

Wenn ferner beispielsweise ein Funktionsmodul 16 zur Steuerung der Erfassung des Luftdruckes mit dem Sensor 11 (siehe die Figur 1) vorgesehen ist, so kann dieses Funktionsmodul 16 durch einen zugehörigen Parameter in dem Parametersatz 17 aktiviert werden und weitere Parameter in dem Parametersatz 17 können beschreiben, in welchem Intervall die Druckmessung ausgeführt werden soll, beispielsweise alle 5 Sekunden. Falls gewünscht, können ferner Grenzwerte für die Druckmessung übergeben werden, um zu bestimmen, ob ein gemessener Druck den Grenzwert erreicht oder überschritten hat und ob deswegen das Erfassungsintervall des Druckes und/oder ein Sendeintervall der Druckinformation an die Empfangseinrichtung 4 im Fahrzeug geändert werden soll und/oder ob ein Warnsignal ausgegeben werden soll.

Ein weiterer Parameter in dem Parametersatz 17 kann beispielsweise bestimmen, wieviel Bit für den Druckwert in dem Signal zur Verfügung stehen. Dabei kann diese Information entweder in dem Funktionsmodul 16 zur Steuerung der Erfassung des Luftdruckes und der Sendung eines hiervon abhängigen Druckwertes verwendet werden, oder für die verschiedenen erfassten Zustandsgrößen in einem Funktionsmodul, das die Codierung des Signals, wie zuvor beschrieben, festlegt.

Neben den der Erfassung einzelner Zustandsgrößen beziehungsweise dem Aufbau des Signals zugeordneten Parametern kann der Parametersatz 17 auch weitere Informationen aufweisen, beispielsweise einen Identifikationscode und/oder eine Seriennummer der Überwachungseinrichtung oder andere mittels dem Computer 21 eingebbare reifenspezifische Größen, beispielsweise die aktuelle Profiltiefe oder anderes.

## Patentansprüche

1. Universelle Überwachungseinrichtung (10) zur Überwachung von einer oder mehreren Zustandsgrößen eines Fahrzeugreifens, umfassend
wenigstens einen Sensor (11) zur Erfassung einer Zustandsgröße des Fahrzeugreifens;
wenigstens einen Sender (12) zur Übersendung eines drahtlosen codierten Signals in Abhängigkeit der erfassten Zustandsgröße;
wenigstens eine Steuervorrichtung (13), die mit dem Sensor (11) und dem Sender (12) in Verbindung steht, um die Erfassung der Zustandsgröße und die Sendung des Signals zu steuern; wobei
der Steuervorrichtung (13) ein Speicher (14) zugeordnet oder in diese integriert ist, in welchem ein durch die Steuervorrichtung (13) ausführbares Computerprogramm (18) gespeichert ist, das die Erfassung der Zustandsgröße und die Sendung des Signals steuert;
**dadurch gekennzeichnet, dass**
das Computerprogramm (18) eine Vielzahl von einzelnen oder in Gruppen aktivierbare Funktionsmodule (16) aufweist, die eingerichtet sind, um in Abhängigkeit von ihrer Aktivierung oder Deaktivierung den Inhalt und die Codierung des zu sendenden Signals zu verändern;
der Steuervorrichtung (13) ein Empfänger (15) zum Empfangen eines Parametersatzes (17) zugeordnet ist;
der Speicher (14) zum Speichern des vom Empfänger (15) empfangenen Parametersatzes (17) eingerichtet ist, und
das Computerprogramm (18) eingerichtet ist, um seine Funktionsmodule (16) in Abhängigkeit von Parametern des gespeicherten Parametersatzes (17) zu aktivieren und deaktivieren und die Veränderung des Inhalts und der Codierung des zu sendenden Signals durch die Funktionsmodule (16) in Abhängigkeit von Parametern des gespeicherten Parametersatzes (17) zu bestimmen.

2. Universelle Überwachungseinrichtung (10) gemäß Anspruch 1, **dadurch gekennzeichnet, dass** das Computerprogramm (18) eingerichtet ist, um stets wenigstens zwei seiner Funktionsmodule (16) in Abhängigkeit des gespeicherten Parametersatzes (17) zu aktivieren.

3. Universelle Überwachungseinrichtung (10) gemäß einem der Ansprüche 1 oder 2, **dadurch gekennzeichnet, dass** verschiedene, insbesondere einzeln aktivierbare und deaktivierbare Funktionsmodule (16) vorgesehen sind, von denen jedes eingerichtet ist, um die Erfassung einer anderen Zustandsgröße in dem Fahrzeugreifen und die Sendung eines hiervon abhängigen Wertes in dem Signal zu steuern, sodass durch die Aktivierung eines Funktionsmoduls (16) die Überwachung einer aus einer Vielzahl von möglichen Zustandsgrößen des Fahrzeugreifens bestimmt werden kann.

4. Universelle Überwachungseinrichtung (10) gemäß einem der Ansprüche 1 bis 3, **dadurch gekennzeichnet, dass** der Parametersatz (17) einen oder mehrere Parameter aufweist, welche die Position eines Wertes einer mit dem Sensor (11) erfassten Zustandsgröße in dem zu sendenden Signal bestimmen.

5. Universelle Überwachungseinrichtung (10) gemäß einem der Ansprüche 1 bis 4, **dadurch gekennzeichnet, dass** der Parametersatz (17) einen oder mehrere Parameter aufweist, welche die Bitlänge eines Wertes einer mit dem Sensor (11) erfassten Zustandsgröße in dem zu sendenden Signal bestimmen.

6. Universelle Überwachungseinrichtung (10) gemäß einem der Ansprüche 1 bis 5, **dadurch gekennzeichnet, dass** der Parametersatz (17) einen oder mehrere Parameter aufweist, welche ein Sendeintervall und/oder eine Bitübertragungsgeschwindigkeit des zu sendenden Signals bestimmen.

7. Universelle Überwachungseinrichtung (10) gemäß einem der Ansprüche 1 bis 6, **dadurch gekennzeichnet, dass** der Parametersatz (17) einen oder mehrere Parameter aufweist, welche ein Erfassungsintervall zur Erfassung einer Zustandsgröße mit dem Sensor (11) bestimmen.

8. Universelle Überwachungseinrichtung (10) gemäß einem der Ansprüche 1 bis 7, **dadurch gekennzeichnet, dass** die Funktionsmodule (16) eins, mehrere oder alle der folgenden Funktionsmodule (16) umfassen:
- ein Funktionsmodul (16) zur Steuerung der Erfassung des Luftdruckes in dem Fahrzeugreifen und der Sendung eines hiervon abhängigen Druckwertes
- ein Funktionsmodul (16) zur Steuerung der Erfassung einer Temperatur in dem Fahrzeugreifen und der Sendung eines hiervon abhängigen Temperaturwertes
- ein Funktionsmodul (16) zur Steuerung der Energieabgabe einer in der Überwachungseinrichtung (10) integrierten elektrischen Batterie
- ein Funktionsmodul (16) zur Steuerung einer Zeiterfassung
- ein Funktionsmodul (16) zur Steuerung der Codierung, des Sendeintervalls, der Bitübertragungsgeschwindigkeit und/oder der Modulation des zu sendenden Signals
- ein Funktionsmodul (16) zur Steuerung der Sendung von in dem Parametersatz (17) abgelegten Statuswerten, Identifikationswerten und/oder Grenzwerten für die Zustandsgröße.

9. Universelle Überwachungseinrichtung (10) gemäß einem der Ansprüche 1 bis 8, **dadurch gekennzeichnet, dass** der Überwachungseinrichtung (10) ein Beschleunigungssensor zugeordnet oder in diese integriert ist, welcher die Richtung einer Beschleunigung der Überwachungseinrichtung (10) erfasst und die Funktionsmodule (16) ein Funktionsmodul (16) zur Steuerung der Erfassung der Beschleunigungsrichtung mit dem Beschleunigungssensor und zum Senden eines hiervon abhängigen Wertes mit dem Sender (12) aufweist.

10. Universelle Überwachungseinrichtung (10) gemäß einem der Ansprüche 1 bis 9, **dadurch gekennzeichnet, dass** der Überwachungseinrichtung (10) ein zweiter Empfänger zugeordnet ist oder in diese integriert ist, der zum Empfangen von Steuersignalen aus einer Sendevorrichtung des Fahrzeugs eingerichtet ist, und die Funktionsmodule (16) ein Funktionsmodul (16) zur Steuerung des zweiten Empfängers und Verarbeitung der von diesen empfangenen Steuersignalen aufweist.

11. Universelle Überwachungseinrichtung (10) gemäß einem der Ansprüche 1 bis 10, **dadurch gekennzeichnet, dass** der im Speicher (14) gespeicherte Parametersatz (17) frei von einem durch die Steuervorrichtung (13) ausführbaren Programm ist.

12. Verfahren zur Konfiguration einer universellen Überwachungseinrichtung (10) zur Überwachung von einer oder mehreren Zustandsgrößen eines Fahrzeugreifens, wobei die Überwachungseinrichtung (10) wenigstens einen Sensor (11) zur Erfassung der Zustandsgröße, wenigstens einen Sender (12) zur Übersendung eines drahtlosen codierten Signals in Abhängigkeit der erfassten Zustandsgröße und wenigstens eine Steuervorrichtung (13), die die Erfassung der Zustandsgröße mit dem Sensor (11) und die Sendung des Signals mit dem Sender (12) steuert, aufweist, und in einem Speicher (14) innerhalb der Steuervorrichtung (13) oder in einem der Steuervorrichtung (13) zugeordneten Speicher (14) ein durch die Steuervorrichtung (13) ausführbares Computerprogramm (18) gespeichert ist, das durch die Steuervorrichtung (13) ausgeführt wird, um in Abhängigkeit hiervon die Erfassung der Zustandsgröße und die Sendung des Signals zu steuern; **gekennzeichnet durch** den folgenden Schritt:
Übertragen eines Parametersatzes (17) mittels einer Konfigurationseinrichtung (20) drahtlos oder drahtgebunden an die Steuervorrichtung (13) und Speichern des Parametersatzes (17) in dem Speicher (14), wobei das Computerprogramm (18) anschließend eines oder mehrere einer Vielzahl von in ihm vorgesehenen Funktionsmodule (16) in Abhängigkeit von Parametern des gespeicherten Parametersatzes (17) aktiviert oder deaktiviert und die Funktionsmodule (16) in Abhängigkeit ihrer Aktivierung oder Deaktivierung und in Abhängigkeit von Parametern des gespeicherten Parametersatzes (17) den Inhalt und die Codierung des mit dem Sender (12) gesendeten Signals verändern.

13. Verfahren gemäß Anspruch 12, **dadurch gekennzeichnet, dass** das Computerprogramm (18) wenigstens zwei seiner Funktionsmodule (16) in Abhängigkeit des gespeicherten Parametersatzes (17) aktiviert.

14. Verfahren gemäß einem der Ansprüche 12 oder 13, **dadurch gekennzeichnet, dass** das Computerprogramm (18) die Position wenigstens eines Wertes wenigstens einer mit dem Sensor (11) erfassten Zustandsgröße in dem gesendeten Signal in Abhängigkeit von einem oder mehreren Parametern des gespeicherten Parametersatzes (17) ändert.

15. Verfahren gemäß einem der Ansprüche 12 bis 14, **dadurch gekennzeichnet, dass** das Computerprogramm (18) die Bitlänge wenigstens eines Wertes wenigstens einer mit dem Sensor (11) erfassten Zustandsgröße in dem gesendeten Signal in Abhängigkeit von einem oder mehreren Parametern des gespeicherten Parametersatzes (17) ändert.

16. Verfahren gemäß einem der Ansprüche 12 bis 15, **dadurch gekennzeichnet, dass** das Computerprogramm (18) ein Sendeintervall und/oder eine Bitübertragungsgeschwindigkeit des gesendeten Signals in Abhängigkeit von einem oder mehreren Parametern des gespeicherten Parametersatzes (17) ändert.

17. Verfahren gemäß einem der Ansprüche 12 bis 16, **dadurch gekennzeichnet, dass** das Computerprogramm (18) das Erfassungsintervall zur Erfassung einer Zustandsgröße mit dem Sensor (11) in Abhängigkeit von einem oder mehreren Parametern des gespeicherten Parametersatzes (17) ändert.

## Claims

1. A universal monitoring device (10) for monitoring one or more state variables of a vehicle tire, comprising at least one sensor (11) for detecting a state variable of the vehicle tire;
at least one transmitter (12) for transmitting a wireless, coded signal depending on the detected state variable;
at least one control device (13) which is connected to the sensor (11) and the transmitter (12) in order to control the detection of the state variable and the transmission of the signal; wherein
a memory (14) is assigned to or integrated into the control device (13), in which memory (14) a computer program (18) executable by the control device (13) is stored, which controls the detection of the state variable and the transmission of the signal;
**characterized in that**
the computer program (18) comprises a plurality of function modules (16), activatable individually or in groups, which are configured to modify the content and the coding of the signal to be transmitted in dependence of their activation or deactivation;
a receiver (15) is assigned to the control device (13) for receiving a parameter set (17);
the memory (14) is configured to store the parameter set (17) received by the receiver (15), and
the computer program (18) is configured to activate and deactivate its function modules (16) in dependence of parameters of the stored parameter set (17) and to determine the modification in the content and the coding of the signal to be transmitted by the function modules (16) in dependence of parameters of the stored parameter set (17).

2. Universal monitoring device (10) according to claim 1,
**characterized in that**
the computer program (18) is configured to always activate at least two of its function modules (16in dependence of the stored parameter set (17).

3. Universal monitoring device (10) according to one of claims 1 or 2,
**characterized in that**
various, in particular individually activatable and deactivatable function modules (16) are provided, each of which is configured to control the detection of a different state variable in the vehicle tire in the signal and the transmission of a value dependent thereupon in the signal, such that by means of the activation of a function module (16) the monitoring of one out of a plurality of possible state variables of the vehicle tire can be determined.

4. Universal monitoring device (10) according to one of claims 1 to 3,
**characterized in that**
the parameter set (17) comprises one or more parameters which determine the position of a value of a state variable detected by the sensor (11) in the signal to be transmitted.

5. Universal monitoring device (10) according to one of claims 1 to 4,
**characterized in that**
the parameter set (17) comprises one or more parameters which determine the bit length of a value of a state variable detected by the sensor (11) in the signal to be transmitted.

6. Universal monitoring device (10) according to one of claims 1 to 5,
**characterized in that**
the parameter set (17) comprises one or more parameters which determine a transmission interval and/or a bit transmission rate of the signal to be transmitted.

7. Universal monitoring device (10) according to one of claims 1 to 6,
**characterized in that**
the parameter set (17) comprises one or more parameters which determine a detection interval for detecting a state variable with the sensor (11).

8. Universal monitoring device (10) according to one of claims 1 to 7,
**characterized in that**
the functional modules (16) comprise one, several or all of the following functional modules (16):
- a functional module (16) for controlling the detection of the air pressure in the vehicle tire and the transmission of a pressure value dependent thereon
- a function module (16) for controlling the detection of a temperature in the vehicle tire and the transmission of a temperature value dependent thereon
- a function module (16) for controlling the energy output of an electrical battery integrated in the monitoring device (10)
- a function module (16) for controlling a time recording
- a function module (16) for controlling the coding, the transmission interval, the bit transmission rate and/or the modulation of the signal to be transmitted
- a function module (16) for controlling the transmission of state values, identification values and/or threshold values for the state variable stored in the parameter set (17).

9. Universal monitoring device (10) according to one of claims 1 to 8,
**characterized in that**
an acceleration sensor is assigned to or integrated into the monitoring device (10), which detects the direction of acceleration of the monitoring device (10) and the function modules (16) comprise a function module (16) for controlling the detection of the direction of acceleration with the acceleration sensor and for transmitting a value dependent thereon with the transmitter (12).

10. Universal monitoring device (10) according to one of claims 1 to 9,
**characterized in that**
a second receiver is assigned to or integrated into the monitoring device (10), which is configured to receive control signals from a transmission device of the vehicle, and the function modules (16) comprise a function module (16) for controlling the second receiver and processing the control signals received by said second receiver.

11. Universal monitoring device (10) according to one of claims 1 to 10,
**characterized in that**
the parameter set (17) stored in the memory (14) is free of a program which can be executed by the control device (13).

12. Method for configuring a universal monitoring device (10) for monitoring one or more state variables of a vehicle tire, wherein the monitoring device (10) comprises at least one sensor (11) for detecting the state variable, at least one transmitter (12) for transmitting a wireless coded signal depending on the detected state variable and at least one control device (13) which controls the detection of the state variable with the sensor (11) and the transmission of the signal with the transmitter (12), and a computer program (18) being executable by the control device (13) is stored in a memory (14) within the control device (13) or in a memory (14) assigned to the control device (13), which computer program (18) is executed by the control device (13) in order to control, in dependency thereupon, the detection of the state variable and the transmission of the signal;
**characterized by** the following step:
transferring a parameter set (17) by means of a configuration device (20) wirelessly or by wire to the control device (13) and storing the parameter set (17) in the memory (14), wherein the computer program (18) subsequently activates or deactivates one or several of a plurality of function modules (16) provided therein, in dependency of parameters of the stored parameter set (17), and the function modules (16) modify the content and the coding of the signal sent by the transmitter (12) in dependency of their activation or deactivation and in dependency of parameters of the stored parameter set (17)

13. Method according to claim 12,
**characterized in that**
the computer program (18) activates at least two of its function modules (16) in dependency of the stored parameter set (17).

14. Method according to one of claims 12 or 13,
**characterized in that**
the computer program (18) modifies the position of at least one value of at least one state variable detected by the sensor (11) in the transmitted signal in dependence of one or more parameters of the stored parameter set (17).

15. Method according to one of claims 12 to 14,
**characterized in that**
the computer program (18) modifies the bit length of at least one value of at least one state variable detected by the sensor (11) in the transmitted signal in dependence of one or more parameters of the stored parameter set (17).

16. Method according to one of claims 12 to 15,
**characterized in that**
the computer program (18) modifies a transmission interval and/or a bit transmission rate of the transmitted signal in dependence of one or more parameters of the stored parameter set (17).

17. Method according to one of claims 12 to 16,
**characterized in that**
the computer program (18) modifies the detection interval for detecting a state variable with the sensor (11) in dependence of one or more parameters of the stored parameter set (17).

## Revendications

1. Installation de surveillance universelle (10) pour la surveillance d'une ou plusieurs grandeurs d'état d'un pneumatique d'un véhicule, comprenant
au moins un capteur (11) destiné à acquérir une grandeur d'état du pneumatique de véhicule ;
au moins un émetteur (12) destiné à transmettre un signal codé
sans fil en fonction de la grandeur d'état acquise ;
au moins un dispositif de commande (13) qui communique avec le capteur (11) et avec l'émetteur (12) pour contrôler l'acquisition de la grandeur d'état et l'émission du signal ; dans laquelle
le dispositif de commande (13) est associé à une mémoire (14) ou intégré dans celle-ci, dans laquelle est stocké un programme d'ordinateur (18) qui peut être exécuté par le dispositif de commande (13) et qui contrôle l'acquisition de la grandeur d'état et l'émission du signal ;
**caractérisée en ce que**
le programme d'ordinateur (18) comprend plusieurs modules fonctionnels (16) qui peuvent être activés séparément ou par groupes et qui sont conçus pour modifier le contenu et le codage du signal à émettre selon qu'ils sont activés ou désactivés ;
le dispositif de commande (13) est associé à un récepteur (15) destiné à recevoir un ensemble de paramètres (17) ;
la mémoire (14) est conçue pour enregistrer l'ensemble de paramètres (17) reçu par le récepteur (15) et
le programme d'ordinateur (18) est conçu pour activer et désactiver ses modules fonctionnels (16) en fonction des paramètres de l'ensemble de paramètres (17) en mémoire et pour déterminer le changement du contenu et du codage du signal à émettre par les modules fonctionnels (16) en fonction de paramètres de l'ensemble de paramètres (17) en mémoire.

2. Installation de surveillance universelle (10) selon la revendication 1, **caractérisée en ce que** le programme d'ordinateur (18) est conçu pour toujours activer au moins deux de ses modules fonctionnels (16) en fonction de l'ensemble de paramètres (17) en mémoire.

3. Installation de surveillance universelle (10) selon l'une des revendications 1 ou 2, **caractérisée en ce que** sont prévus différents modules fonctionnels (16), pouvant en particulier être activés et désactivés séparément, dont chacun est conçu pour contrôler l'acquisition d'une autre grandeur d'état dans le pneumatique de véhicule et l'émission d'une valeur dépendante de celle-ci dans le signal, de sorte que l'activation d'un module fonctionnel (16) permet de déterminer la surveillance de l'une des nombreuses grandeurs d'état possibles du pneumatique de véhicule.

4. Installation de surveillance universelle (10) selon l'une des revendications 1 à 3, **caractérisée en ce que** l'ensemble de paramètres (17) comprend un ou plusieurs paramètres qui déterminent la position d'une valeur d'une grandeur d'état acquise avec le capteur (11) dans le signal à émettre.

5. Installation de surveillance universelle (10) selon l'une des revendications 1 à 4, **caractérisée en ce que** l'ensemble de paramètres (17) comprend un ou plusieurs paramètres qui déterminent la longueur binaire d'une valeur d'une grandeur d'état acquise avec le capteur (11) dans le signal à émettre.

6. Installation de surveillance universelle (10) selon l'une des revendications 1 à 5, **caractérisée en ce que** l'ensemble de paramètres (17) comprend un ou plusieurs paramètres qui déterminent un intervalle d'émission et/ou une vitesse de transmission binaire du signal à émettre.

7. Installation de surveillance universelle (10) selon l'une des revendications 1 à 6, **caractérisée en ce que** l'ensemble de paramètres (17) comprend un ou plusieurs paramètres qui déterminent un intervalle d'acquisition pour l'acquisition d'une grandeur d'état avec le capteur (11).

8. Installation de surveillance universelle (10) selon l'une des revendications 1 à 7, **caractérisée en ce que** les modules fonctionnels (16) comprennent un, plusieurs ou tous les modules fonctionnels (16) suivants :
- un module fonctionnel (16) pour contrôler l'acquisition de la pression d'air dans le pneumatique de véhicule et l'émission d'une valeur de pression dépendante de celle-ci ;
- un module fonctionnel (16) pour contrôler l'acquisition d'une température dans le pneumatique de véhicule et l'émission d'une valeur de température dépendante de celle-ci
- un module fonctionnel (16) pour contrôler la fourniture d'énergie par une batterie électrique intégrée dans l'installation de surveillance (10) ;
- un module fonctionnel (16) pour contrôler un comptage du temps ;
- un module fonctionnel (16) pour contrôler le codage, l'intervalle d'émission, la vitesse de transmission binaire et/ou la modulation du signal à émettre ;
- un module fonctionnel (16) pour contrôler l'émission de valeurs d'état, de valeurs d'identification et/ou de valeurs limites de la grandeur d'état enregistrées dans l'ensemble de paramètres (17).

9. Installation de surveillance universelle (10) selon l'une des revendications 1 à 8, **caractérisée en ce que** l'installation de surveillance (10) est associée à ou intégrée dans un capteur d'accélération qui acquiert la direction d'une accélération de l'installation de surveillance (10) et les modules fonctionnels (16) comportent un module fonctionnel (16) pour contrôler l'acquisition du sens d'accélération avec le capteur d'accélération et pour émettre une valeur dépendante de celle-ci avec l'émetteur (12).

10. Installation de surveillance universelle (10) selon l'une des revendications 1 à 9, **caractérisée en ce que** l'installation de surveillance (10) est associée à ou intégrée dans un deuxième récepteur conçu pour recevoir des signaux de commande d'un dispositif émetteur du véhicule et les modules fonctionnels (16) comprennent un module fonctionnel (16) pour la commande du deuxième récepteur et le traitement de ces signaux de commande reçus.

11. Installation de surveillance universelle (10) selon l'une des revendications 1 à 10, **caractérisée en ce que** l'ensemble de paramètres (17) stockés dans la mémoire (14) ne sont pas associés à un programme exécutable par le dispositif de commande (13).

12. Procédé pour la configuration d'une installation de surveillance universelle (10) pour la surveillance d'une ou plusieurs grandeurs d'état d'un pneumatique de véhicule, dans lequel l'installation de surveillance (10) comprend au moins un capteur (11) destiné à acquérir la grandeur d'état, au moins un émetteur (12) destiné à transmettre un signal codé sans fil en fonction de la grandeur d'état acquise et au moins un dispositif de commande (13) qui communique avec le capteur (11) pour acquérir la grandeur d'état et contrôle l'émission du signal par l'émetteur (12), et un programme d'ordinateur (18) pouvant être exécuté par le dispositif de commande (13) pour contrôler l'acquisition de la grandeur d'état et l'émission du signal pour contrôler l'acquisition de la grandeur d'état et l'émission du signal est stocké à l'intérieur du dispositif de commande (13) ou dans une mémoire (14) associée au dispositif de commande (13),
**caractérisé en ce qu'**il comporte l'étape suivante :
transmission d'un ensemble de paramètres (17) au dispositif de commande (13) sans fil ou par câble au moyen d'une installation de configuration (20) et enregistrement de l'ensemble de paramètres (17) dans la mémoire (14), le programme d'ordinateur (18) activant ou désactivant ensuite un ou plusieurs des nombreux modules fonctionnels (16) qu'il contient en fonction de paramètres de l'ensemble de paramètres (17) en mémoire et les modules fonctionnels (16) modifient le contenu et le codage du signal émis par l'émetteur (12) selon s'ils sont activés ou désactivés et en fonction des paramètres de l'ensemble de paramètres (17) en mémoire.

13. Procédé selon la revendication 12, **caractérisé en ce que** le programme d'ordinateur (18) active au moins deux de ses modules fonctionnels (16) en fonction de l'ensemble de paramètres (17) en mémoire.

14. Procédé selon l'une des revendications 12 ou 13, **caractérisé en ce que** le programme d'ordinateur (18) change la position d'au moins une valeur d'au moins une grandeur d'état acquise avec le capteur (11) dans le signal émis en fonction d'un ou plusieurs paramètres de l'ensemble de paramètres (17) en mémoire.

15. Procédé selon l'une des revendications 12 à 14, **caractérisé en ce que** le programme d'ordinateur (18) change la longueur binaire d'au moins une valeur d'au moins une grandeur d'état acquise avec le capteur (11) dans le signal émis en fonction d'un ou plusieurs paramètres de l'ensemble de paramètres (17) en mémoire.

16. Procédé selon l'une des revendications 12 à 15, **caractérisé en ce que** le programme d'ordinateur (18) change un intervalle d'émission et/ou une vitesse de transmission binaire du signal émis en fonction d'un ou plusieurs paramètres de l'ensemble de paramètres (17) en mémoire.

17. Procédé selon l'une des revendications 12 à 16, **caractérisée en ce que** le programme d'ordinateur (18) change l'intervalle d'acquisition pour l'acquisition d'une grandeur d'état avec le capteur (11) en fonction d'un ou plusieurs paramètres de l'ensemble de paramètres (17) en mémoire.
